(19) Europäisches Patentamt
European Patent Office
Office européen des brevets

(11) Publication number: **0 010 267**
**A2**

(12) **EUROPEAN PATENT APPLICATION**

(21) Application number: 79103932.4

(22) Date of filing: 12.10.79

(51) Int. Cl.³: F 16 F 15/22

(30) Priority: 20.10.78 IT 2897678

(43) Date of publication of application: 30.04.80 Bulletin 80/9

(84) Designated Contracting States: BE CH DE FR GB NL

(71) Applicant: Michelin, Vincenzo
Via Garibaldi, 10
I-24044 Dalmine (Bergamo)(IT)

(72) Inventor: Michelin, Vincenzo
Via Garibaldi, 10
I-24044 Dalmine (Bergamo)(IT)

(74) Representative: Josif, Albert et al,
MODIANO & ASSOCIATI S.A.S. Via Meravigli, 16
I-20123 Milan(IT)

(54) **Inertial compensator device and method.**

(57) A method and device for compensating on looms in running condition the effect of variable moments acting on movable component part members of such looms. The method consists in generating a variation of the moment of inertia of at least one rotating mass mechanically linked to the movable component part members, the variations being in operative and time correlation with the variable moments.

The device consists in a compensator comprising two masses arranged radially and symmetrical to each other, the masses being displaceable radially and symmetrically to each other and arranged to follow while rotating the profile of a cam through a rolling contact wheel.

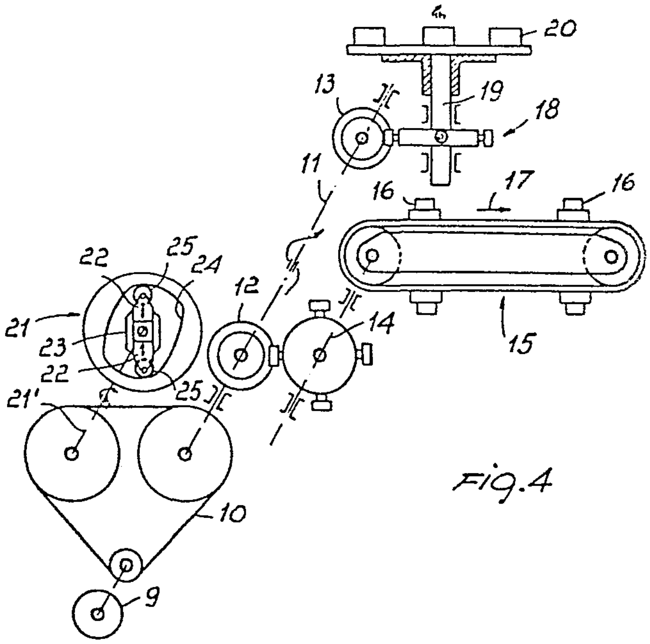


FIG.4

EP 0 010 267 A2

This invention relates to a rotating inertial compensator, for compensating abrupt angular velocity and torque variations in looms.

The problem posed by velocity variations in moving masses of a loom and by the forces and momentums connected therewith is a fundamental one in the design and construction of looms. That problem has different aspects which are, in a way, peculiar to each machine type. However, there exist some significant aspects of it which are more frequently recurrent and may be dealt with in a more generalized manner. This invention is concerned above all with those accelerations and forces associated therewith which occur periodically during the working cycle of a machine, and especially with a transient, often pulsive, character within the cycle, and in general departing from the uniform and sinusoidal pattern which most ideally suits a machine. Typical examples of this mode of operation are all the piston or link motion machines, textile looms with their accessories such as dobbies and jacquards, rectilinear stroke machine tools such as punching presses, shaping machines, or slotting machines, to name but a few and give a better picture of the problem without any attempt at a complete classification.

It is general practice, and one that has proved quite useful, in dealing with energy balances and motion equations, to reduce all of the concurring masses set to motion, and all of the forces and couples applied thereto, to a single reference axle which can

well be the motor shaft, or any main drive shaft, as is the case with looms, and to which a conventional angular velocity $\omega$ is attributed becoming also the angular velocity of the reduced masses. As is known, the reduction operation leaves unaltered the works of the forces and moments, as well as the kinetic energies of the moving masses, whether the latter's motion is originally rectilinear or rotary. By denoting with M'm, M'r and M'p the total comprehensive moments, respectively of the driving forces, useful resistances, and passive resistances, as reduced to the reference shaft, and with I' the sum of the moments of inertia of the various moving masses, also reduced to the reference shaft, and by equating the work of the moments for a differential rotation $d\varphi = \omega dt$ of the shaft to the corresponding kinetic energy variation, the following basic dynamic equation for the system is arrived at,

$$(M'm - M'r - M'p)\, d\varphi = d\left(I' \frac{\omega^2}{2}\right) \qquad (1)$$

In several cases, I' is constant, or may be considered such in practice, because there are no masses which associate and dissociate themselves with the system, or vary their radius of rotation during the operational steps, thereby equation (1) may be simplified into,

$$(M'm - M'r - M'p)\, d\varphi = I'\, d\frac{\omega^2}{2} \qquad (2)$$

This differential equation quantifies the otherwise intuitive notion that if the moments do not balance out at each instant, there will occur a variation of angular velocity which is greater the smaller is the total equivalent moment of inertia I'. From equation (2), as the latter is usually written, it appears that, to limit

the velocity variations, two separate courses may be taken: a) to act on the motor system M'm such as to make it more readily adaptable, continuously throughout the cycle, to the instantaneous variations of the variable loads; b) to increase the moment of inertia of the system. Both courses have been followed already in the past, sometimes simultaneously, but have each serious drawbacks and limitations. A more adaptable electric motor could indeed be produced, but not so easily: an increased torque implies higher inertia, while a fast response requires D.C. motors with programmed regulation, and this involves the necessity of studying each individual case by itself, thus raising the costs; moreover, while very good regulations of the first and second order can be provided, it is impossible to eliminate high rate transients, with attendant unforeseeable and not always damped surges. The moment of inertia is increased by the addition of a flywheel, which makes it in part unnecessary to act on the motor.

But neither a more adaptable motor, nor the added flywheel can do anything to attenuate the moments of the forces, which impose such responsivenesses and which undesirably overload the drive system to result in wear and noisy operation of the machine.

In order to reduce where possible such serious drawbacks, and solve anyhow the aforesaid problem in a more rational way, the Applicant has reviewed the analysis of the dynamic phenomena involved from their basis.

It will be appreciated, first and foremost, that

in those very machines wherein the difficulties brought forth by the accelerated masses are greatest, the total reduced moment of inertia I' cannot be considered to be constant not even as a preliminary approximation. Thus, in equation (1), the right-hand term should be written as follows:

$$d\left(I' \frac{\omega^2}{2}\right) = I'\omega \frac{d\omega}{dt} dt + \frac{\omega^2}{2} \frac{dI'}{dt} dt \qquad (3)$$

For convenience of mathematical expression and discussion, it is expedient that the derivative of I' term be written as the work of a reduced equivalent moment,

$$M'_i \frac{d\varphi}{dt} = \frac{\omega^2}{2} \frac{dI'}{dt} \qquad (4)$$

thus obtaining,

$$M'm - M'r - M'p + M'i = I' \frac{d\omega}{dt} \qquad (5)$$

which is formally identical to (2), but where I' is, however, strictly a function of t. The advantage of the expression as (5) is that the various moments therein can be obtained experimentally, e.g. through an oscilloscopic analysis of the machine being examined. Assuming, by way of example, the case of a loom, the magnitude of the moment M'i is in general several times higher than the other reduced moments. Thus we learn from (5) that any attempt to balance a loom by optimizing the velocity and acceleration values, and by adding a flywheel of suitable size, means to neglect in (5) the predominant term M'i.

The pattern of the force couples during a working cycle in the steady condition, as required by the two main members of a loom, is shown in Figure 1. The curves therein show the values of the couples M'i, or

of the instantaneous powers proportional thereto, whether absorbed or delivered, respectively: a) by weft insertion devices; b) by the sley; c) total, i.e. the sum of a) plus b); and at d) the variation of the couple M'p as absorbed by the passive resistances. From the diagram, the curve representing the couple M'r due to the useful integral work has been omitted because in this specific case it has a negligible value.

With reference in particular to curve c, it is noticeable that it goes repeatedly from positive to negative, and viceversa, within one period, whilst its average value is very small. By comparison of the peak values of the curve c with those of curve d, it can be observed that the M'i/M'p ratio is a high one, and it will be appreciated, therefore, how difficult can be the choice of a suitable motor, having such a low average power and high instantaneous couples. In actual practice, no motor, whether an electric, thermal, hydraulic or otherwise one, affords an adaptive response as would be required here.

A practical solution to this difficult problem has been sought in the hypothesis that the speed of the machine should be maintained as constant as possible during a cycle, for example within a few percent, which is based on the assumption that "the more uniform is the operation of the machine the better will be the quality of the product, the smaller the dimensions required for its drive members and the longer their useful life". But the above summary of the extensive investigation made reveals already that the situation is much more complex.

BAD ORIGINAL

First of all, it is observed that the stresses do not decrease as the machine speed is made steadier; secondly, that it would be necessary to compensate the pulses generated right at the axle wherefrom they originate instead of at the central reference shaft.

Thus, after eliminating the dogmatic assumption or prejudice of maximum speed constancy, the Applicant has arrived, as a result of an investigation of his own, at the following conclusions: (i) it is necessary that at any instant the couple produced by those masses which generate a variable moment of inertia be balanced out; (ii) the time constant of the system must be reduced as much as possible, and along with it the kinetic energies involved, rather than making rigid the members subject to wear; (iii) excess or insufficiency of drive couple has much more important effects at the high speeds than at the low ones; (iv) by increasing the couple and speed of response of the motor the stresses on the drive members are not reduced; (v) at the root of faults, also those of the product, and at the root of the wear of the component members are the actual stresses, and not deviation in angular velocity, which are to be viewed as effects rather than causes.

In the light of the above fresh achievements, it is a general object of this invention to provide a solution which eliminates, from the periodical operation machines such as looms, the problems due to lack of balance between the power and resisting couples, when the energy variations become quite ample and fast.

Another particular object is to provide the looms

with one or more mechanisms effective to compensate, either singly or in toto, the surge energies developed by variable moment moving masses, thus protecting their drive members against uncontrolled or pulsive stresses and ensuring a longer life therefor.

It is a further particular object of the invention to provide a balancing method which affords the delivery of a uniform, surgeless, couple from the machine prime motor.

Still another particular object is to afford substantially higher speeds in machines of the type specified above, after removing the cited difficulties.

These and other objects, such as will become more clearly apparent hereinafter, are achieved according to this invention, by a method for compensating on looms, in running condition the effect of variable moments, characterized in that it consists in generating a variation of the moment of inertia of at least one rotating mass mechanically linked to the members which are subjected to the action of said variable moments said variation being in operative and time correlation with said variable moments.

According to a further aspect of this invention, there is provided a rotating inertial compensator for compensating in accordance with a program or cyclic scheme periodically variable moments, in particular pulsive moments, in an operating loom, characterized in that it comprises at least one mass, preferably two axially symmetrical masses, set to rotate about an axis, and means for shifting in accordance with a cyclic time diagram said mass(es) to different distances from said rotation axis.

Before describing exemplary embodiments of the invention, it would seem appropriate to further clarify

the instant inventive concept. One difficulty in compensating or absorbing variable moments with rigid rotating inertial masses or electric motors resides in that a certain angular velocity variation is bound to occur. However, upon attentive observation of equations (1), (3) and (4), it can be noted that there is a term $\frac{\omega^2}{2} \cdot \frac{dI'}{dt}$ which is capable of delivering or absorbing a couple independently of velocity variations, specifically a couple $M'i = \frac{\omega}{2} \frac{dI'}{dt}$ ; and the invention is in fact based upon the utilization of that capability, known per se, but the advantages whereof have only been pointed out by the recently carried out investigation work by this Applicant. As is known, the moment of inertia of rotating masses about an axis is a basically geometric characteristic of such masses; strong variations thereof can be simply produced by changing the distance of the masses from the rotation axis. A very advantageous aspect resides in that for comparatively small and accordingly as fast as desired changes, there can correspond important energy fluctuations, such as required, for example, by the areas of the curves a and b in Figure 1. Thus, the inventive principle provides compensation for such significant power and absorbed work variations as described, and shown in Figure 1, by varying the moment of inertia Ix of at least one mass set to rotate about an axis x thereof. That variation may be either effected with $\omega$ held constant, or practically with any independent variation of $\omega$, thereby the inertial compensator of this invention will not interfere with any other prearranged form of regulation.

By virtue of its small size with respect to a flywheel, a compensator of this type can be arranged close to and rigid with the member or each of the members which generate power pulses, thus relieving the drives and/or transmissions, an accomplishment long hoped for but actually never fulfilled heretofore.

The invention will be further explained with reference to the following description of preferred, though not limitative, embodiments thereof, to be read in conjunction with the accompanying drawings, where:

Figure 1 shows dynamic curves which are characteristic of a loom, whereto this method can be usefully applied;

Figure 2 is a schematical plan view of a compensator according to the invention;

Figure 3 is an absorbed power graph of a machine, representing the diagram of the moment of the inertial compensator of this invention;

Figure 4 shows in perspective view a schematical arrangement of a machine incorporating the compensator of this invention;

Figures 5 and 6 show in plan view and in section an actual embodiment of a compensator according to the invention; and

Figure 7 shows schematically several compensators according to this invention mounted in combination, as viewed in an axial section a) and elevations b) and c).

The meanings of the curves of Figure 1 have already been explained, and after reading the description that

follows, the expert in the art will have no difficulty to design a compensator according to the invention for its related loom.

Figure 2 should be interpreted as a mere illustration of the principle underlying this invention. A compensator 1 according to the invention comprises essentially a pulley 2, rotatable with a shaft 3; on two radially opposing spokes 4 of the pulley 2, there are mounted two masses 5 which can be shifted or displaced symmetrically along their respective spokes, as indicated by the double-headed arrows 6. By shifting the masses 5 through a mechanical control, e.g. a cyclic control set as a function of the rotation angle, the moment of inertia of the compensator is changed in accordance with equation (3) and the teachings of this invention. Since the compensator device can absorb or deliver rotary kinetic energy at a constant angular velocity, it will be equivalent as such to a flywheel of infinite moment Ix. Therefore, in respect of a machine diagram as shown in Figure 3, there exist the problem of finding a shift or displacement program for the masses 5 which can compensate, at each instant, by variations of Ix, the integral of the couple variation, i.e. its related work. In Figure 3, the curve 7 represents the couple M'i of a loom, and the curve 8 represents the couple M'p of that same loom. To compensate the couple M'i at each time instant, equation (4) is integrated through the interval $t + \Delta t$:

$$\int_{t}^{t+\Delta t} M'i \, \omega dt = \frac{\omega^2}{2} \Delta I'x \qquad (4')$$

BAD ORIGINAL

Since in the case of Figure 2, $\Delta I'x = 2m (\Delta r)^2$ (as a good approximation), where m is the mass 5 and r is the distance of the center of gravity of the mass 5 from the axle, and any graphical approximation is sufficient, the problem posed by the program is easily solved.

The machine drive train or system, whereto the dynamic diagram just described relates, is shown in Figure 4 by way of example. An electric motor 9 rotatively urges, through a drive 10 of either the chain or cogged belt type, or otherwise, the main driveshaft 11 of the machine, wherefrom there extend two power take-offs (P.T.O.'s) 12 and 13. The PTO 12 controls, through a secondary or intermediate shaft 14 and a conveyor 15, a linear movement of a mass 16 in the direction of the arrow 17. The PTO 13 controls, through a device 18 having a vertical rotation shaft 19, an intermittent rotational movement of a mass 20. These are the two successive operations depicted by the curve 7 in Figure 3. The drive 10 also actuates a pulsive couple compensator 21, in accordance with this invention, wherein two rotating masses 22, corresponding to the masses 5 of Figure 2 and arranged to slide between radial guides 23, are urged by a camming profile 24, programmed as mentioned and adapted for both operations. The rpm ratio between the shaft 21' of the compensator 21 and the main driveshaft is generally provided as 1:1, but multiple integers could also be adopted, e.g. to have larger $\omega$ and smaller masses. But above all, as shown in the Figure, the compensator may be inserted at any point of the drive; advantageously, two

BAD ORIGINAL

compensators, similar to 21 and replacing it, may be coupled directly to the device 15, respectively 18, to provide right on the spot the required moments Mi (not reduced). The higher cost of two compensators instead of one will be amply rewarded by the fact that the force pulses or couples are not propagated to the PTO's 12 and 13, and upstream thereof, thus relieving the drive system and controls, as explained hereinabove and clearly apparent by now.

While the provisions so far discussed afford the possibility of arranging for the design and planning of each program and of the inertial compensator device according to the invention, Figures 5 and 6 illustrate more completely the construction of a medium-power compensator as actually applied to a machine having a couple diagram like the one shown in Figure 3.

The compensator device of Figures 5 and 6 is generally indicated at 30 and comprises: a cogged-type driving pulley 31 keyed in an angularly fixed manner to a shaft 32 which is carried in bearings 33, in turn supported by a main body 34. The latter is rigid with the load-bearing structure 35 of the machine whereon the compensator is installed. The body 34 widens out into a bell shape to form a flat annular chamber 36, accommodating the rotary parts of the device 30, which is closed by a cover 37.

To a flanged sleeve 38, keyed to the shaft, there are affixed radial prismatic guides 39; in the two radial opposing channels provided by the guides, there are respectively arranged, symmetrically on either sides, two inertial masses 40 set in rotary motion

BAD ORIGINAL

together with the guides and radially slidable in the guides themselves. For positively controlling the radial sliding movement of the masses, in accordance with the principle underlying this invention, a programming profile is provided, on an inner cam 41 abutting the internal periphery of the bell-like edge of the body 34. The two masses follow the cam profile through respective roller followers 42. Both masses are biased, even while stationary, against the cam by an intervening spring 43, which could be omitted, however, since the centrifugal forces may be sufficient to ensure full contact with the cam.

Said masses can be formed from any suitable high density material, such as iron, bronze (suitably on account of its anti-friction properties), or lead.

This compensator device operates as follows. During each complete revolution, the two masses 40 are twice urged synchronically towards the center by the cam profile, and twice repelled therefrom by the centrifugal force. Each time, they either deliver to the shaft, or absorb, a couple as per equation (4). Assuming, for example, two masses of 1 kg each to be movable through 10 cm along the radius, in one quarter of a revolution, at a speed of 1,500 rpm, it is found that the device is capable of transmitting a peak power of 25 KW.

Figure 7 illustrates how two or more compensator devices according to this invention may be installed together as an assembly.

In the specific instance of Figure 7a, two such devices are mounted in a single body 34'. In Figure 7, similar or corresponding parts are denoted with the same

reference numerals as in Figure 6, occasionally with a suffix character or accent. At b and c, there are shown in elevation the profiles of the cams 41b and 41c as taken along the section lines b-b and c-c, respectively. The assembly functions to compensate 1st order accelerations through the mass 40c, and 4th order ones through the mass 40b.

The advantage of assembling several compensators of this type in parallel, whether joined or separate, is that it becomes possible to compensate, through each of them, a certain component of Mi by means of individually simpler, and accordingly easier to make, camming profiles, which results in a lesser overall waste of energy to frictional resistance and, consequently, less wear.

All the advantages afforded by this invention cannot be easily enumerated herein, because it is yet impossible to foresee all of its potential applications, as suggested by the peculiarities and the analysis of each machine presenting comparable problems. However, it is safe to stress, inasmuch as mathematically demonstrated, that all of the invention objects have been achieved, and this by providing a device which is lightweight and compact in the extreme, when compared to a conventional flywheel of equal power, as well as reliable and not expensive. It should be further noted that, as mentioned in the foregoing, this compensator does not operate at " $\omega$ constant", as one might be led to conclude from an incorrect interpretation of the above differential equations, but rather independently of $\omega$ , thereby it does not interfere with, nor does it

hinder, any other regulation system, be it a flywheel or motor, excepting by performing part of their functions, to directly compensate pulsive or more generally periodical couples.

A further advantage, favoring any one of the several possible applications of the invention, results from the condition that the centers of gravity of the inertial masses are displaced, as shown in Figure 6, in a direction which lies exactly normal to the current rotational velocity of the centers of gravity themselves, thereby the cams controlling said displacement do not execute the acceleration work directly, which is instead transferred directly by the masses to the guides and related axle. A novel aspect, with respect to conventional mechanical devices is that the instant compensator neither absorbs nor delivers energy "spontaneously", but only does it of so programmed by its cam, or other equivalent means.

This is, in fact, still another advantage afforded by the invention when viewed as a method or procedure, i.e. that it can be implemented in an unlimited number of forms reflecting the clearly defined operation $\frac{dIx}{dt}$. Thus, for example, while the cam type of embodiment lends itself ideally to providing any calculated program, other different and simpler controls may be adopted to shift the masses, such as a crank and connecting rod drive, which can be easily implemented by attaching a connecting rod to each mass, the other end or "crankpin" end whereof is pivoted to a fixed off-centered pin, as it was customary to do on certain radial engines; while the faculty would be lost of

BAD ORIGINAL

programming in detail the movement, construction economy would be improved. Two or more strokes per revolution could be obtained here by doubling or more the rpm of the compensator with respect to the reference axle.

Also varied at will may be the shape of the masses and related guides. For example, the rotary system could be reduced to an articulated parallelogram system set to rotate about two symmetrically displaceable articulations, by sliding them sleeve-fashion along their rotation shafts.

# CLAIMS

1. A method for compensating on looms in running condition the effect of variable moments acting on movable component part members of such looms, characterized in that it consists in generating a variation of the moment of inertia of at least one rotating mass mechanically linked to said movable component part members, said variations being in operative and time correlation with said variable moments.

2. A method according to Claim 1, characterized in that said moment of inertia variation (denoted I) for compensating said variable moments (denoted Mi) is calculated on the basis of the following differential equation,

$$Mi(t) = \frac{\omega}{2} \frac{dI}{dt}$$

where $\omega$ is the angular velocity of the rotating mass having the moment of inertia I.

3. A method according to Claim 1, characterized in that at least one rotating mass wherein said variation of the moment of inertia is generated, is mechanically coupled directly to the member transmitting to the machine variable moments to be compensated.

4. A method according to Claim 1, characterized in that the variation of the moment of inertia of said at least one rotating mass is obtained through radial movements of said mass with respect to the rotation axis thereof.

5. A method according to Claim 1, characterized in that the compensated moments are selected

from among weft insertion moments of the loom, sley moments thereof, and the resultant thereof, either separately or in combination.

6. A rotating inertial compensator for compensating in accordance with a program or cyclic schedule periodically variable moments, in particular pulsive moments, in an operating loom, characterized in that it comprises at least one mass, preferably two axially symmetrical masses, set to rotate about an axis, and means for shifting in accordance with a cyclic time diagram said mass(es) to different distances from said rotation axis.

7. A compensator according to Claim 6, characterized in that it comprises guides for rotation together with said one or two rotating masses, said guides being effective to guide said mass(es) through a radial movement with respect to the rotation axis.

8. A compensator according to Claim 7, characterized in that a cam is provided for the programmed cyclic displacement of the mass(es).

9. A compensator according to Claim 8, characterized in that it comprises two masses arranged radially and symmetrical to each other, said masses being displaceable radially and symmetrically to each other and arranged to follow while rotating the profile of said cam through a rolling contact wheel, said cam being stationary and arranged peripherally to provide a concave track wherealong both said masses are caused to run in offset relationship through the respective wheels thereof, the rotation of said masses being synchronous or the rotation of said masses, as reduced to a common reference axis being synchronous with the rotation of the couples to be compensated.

0010267



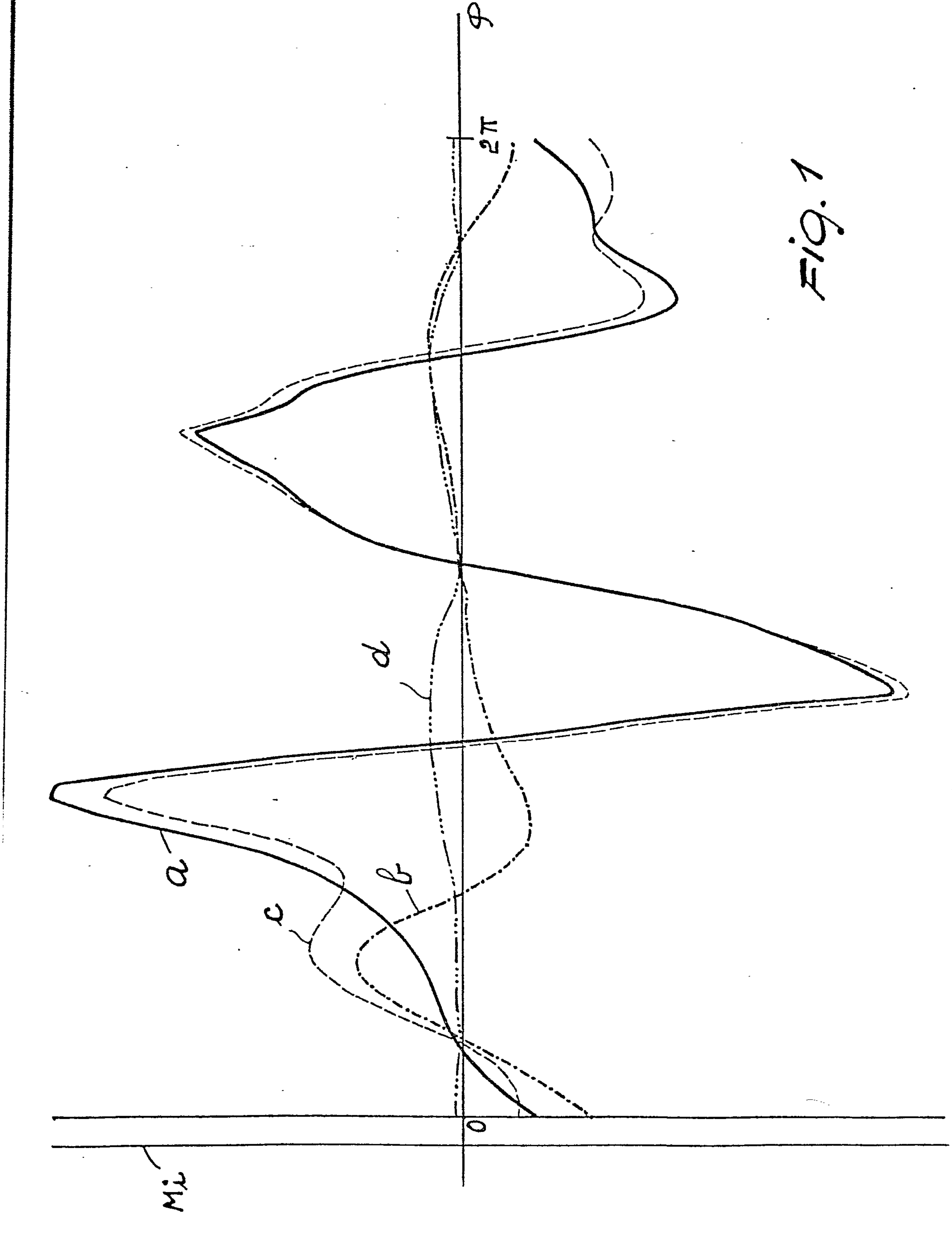


Fig. 1

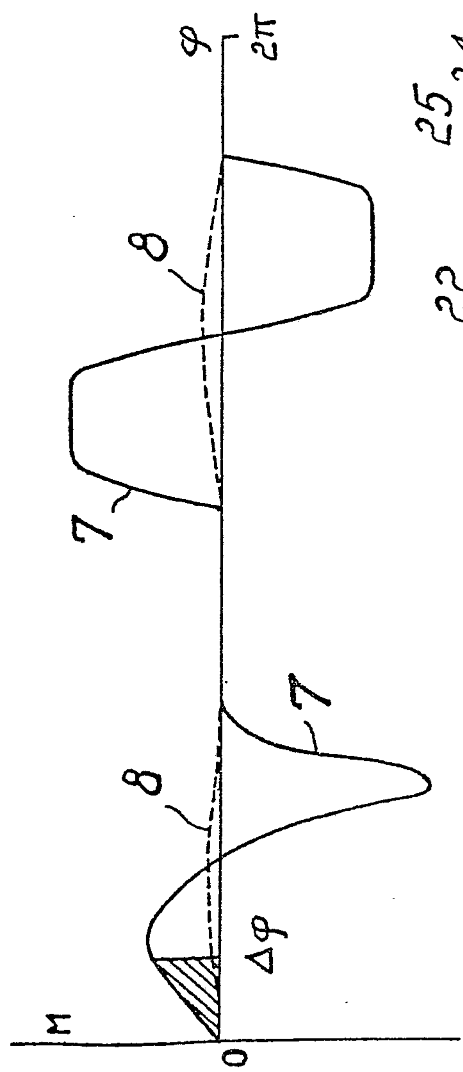


Fig.3

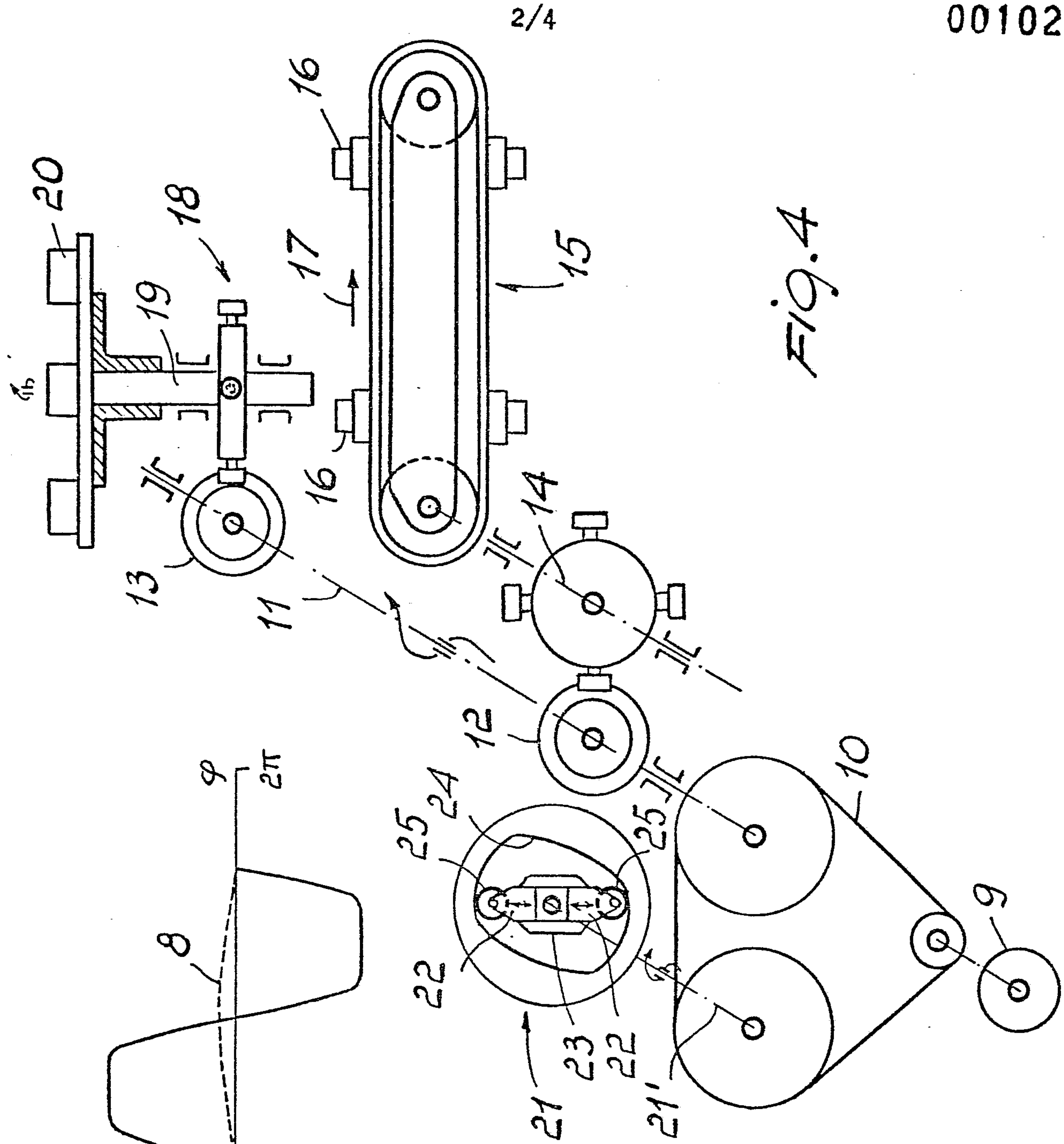


Fig.4

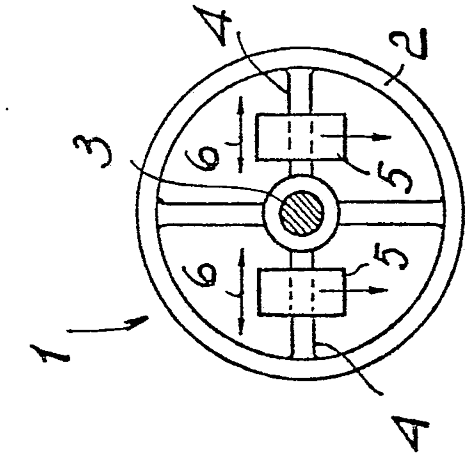


Fig.2

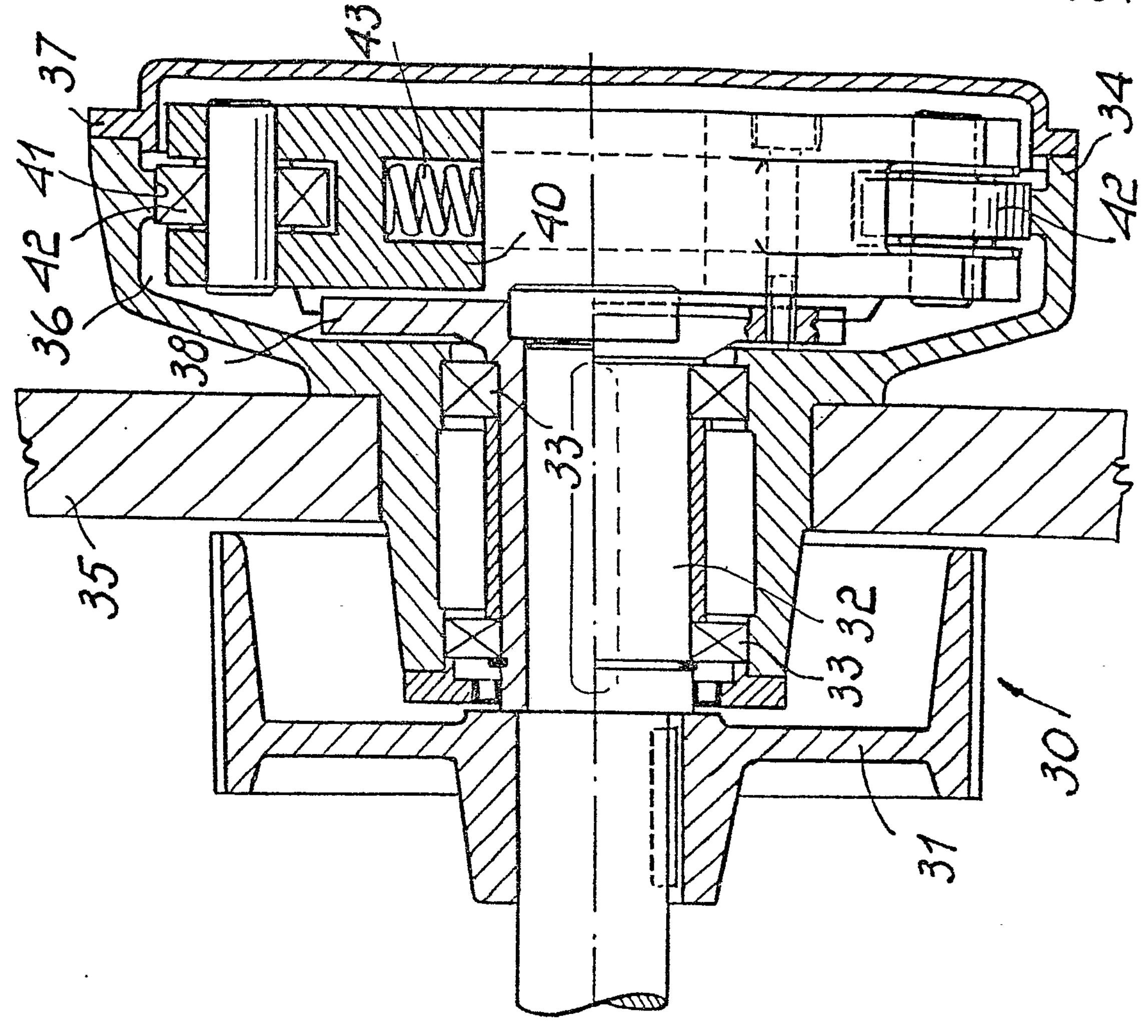
37
43
34
41
42
40
42
36
38
33
35
32
33
30
31

Fig.6

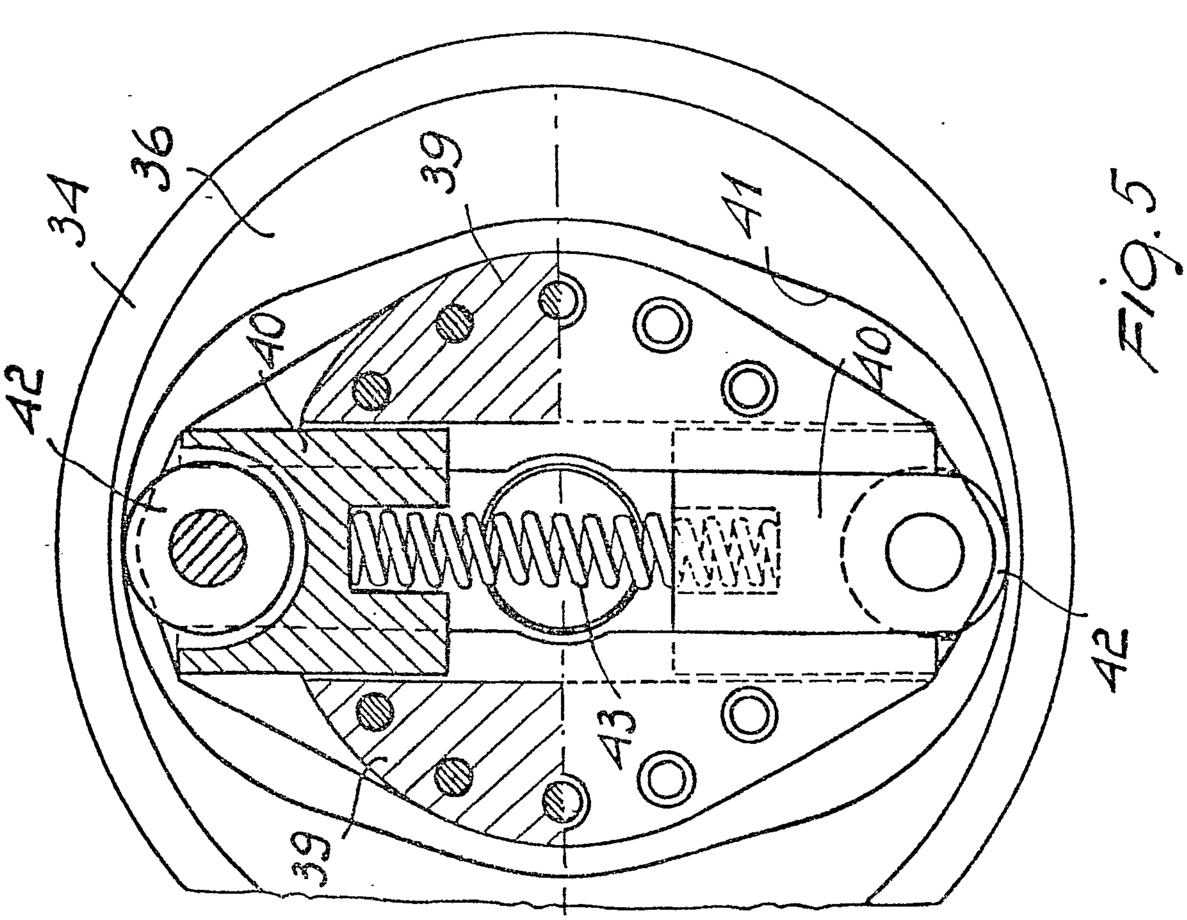
34
36
39
42
40
41
40
43
42
39

Fig.5

0010267

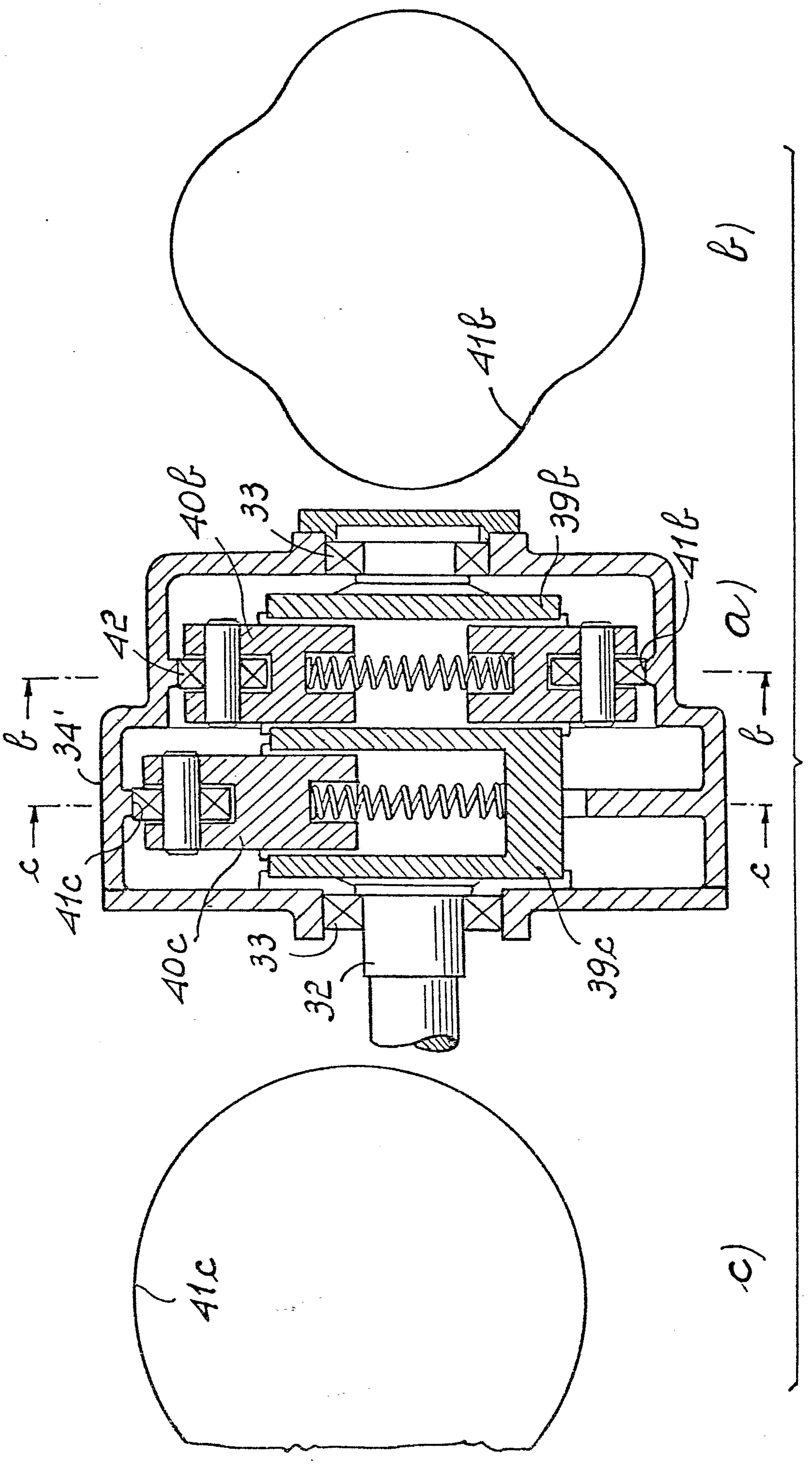


Fig. 7